# EUROPÄISCHE PATENTSCHRIFT

(11) **EP 3 476 191 B1**
(45) Veröffentlichungstag und Bekanntmachung des Hinweises auf die Patenterteilung: **05.08.2020**
(21) Anmeldenummer: 17198983.3
(22) Anmeldetag: 27.10.2017
(51) Int. Cl.: A01C 7/08, A01C 7/04

(54) **VORRICHTUNG UND VERFAHREN ZUM VEREINZELN VON KÖRNERN EINES SAATGUTS, EINES DÜNGERS ODER DERGLEICHEN**
DEVICE AND METHOD FOR SEPARATING GRAINS OF A SEED, A FERTILISER OR SIMILAR
DISPOSITIF ET PROCÉDÉ DE SÉPARATION DES GRAINS DES SEMENCES, DES ENGRAIS OU ANALOGUE

(43) Veröffentlichungstag der Anmeldung: 01.05.2019
(73) Patentinhaber: Kverneland A/S, 4353 Klepp St (NO)
(72) Erfinder: Winkelmann, Michael, 59494 Soest (DE)
(74) Vertreter: Bittner, Thomas L.

(56) Entgegenhaltungen:
- EP-A1- 2 696 667
- WO-A1-2010/059101
- DE-A1-102016 204 453

## Beschreibung

Die Erfindung betrifft eine Vorrichtung und Verfahren zum Vereinzeln von Körnern eines Saatguts, eines Düngers oder dergleichen.

### Hintergrund

Derartige Vorrichtungen dienen dazu, Körner eines Saatguts, eines Düngers oder dergleichen zu vereinzeln, um sie dann vereinzelt auszubringen. Eine hierfür verwendete Vereinzelungseinrichtung kann Teil eines Säherz sein.

In einer Ausführung derartiger Säherzen arbeiten Vereinzelungseinrichtungen nach dem Überdruckprinzip. Hierbei wird in einem Gehäuse der Vereinzelungseinrichtung ein Überdruck auf einer Vorderseite einer Säscheibe erzeugt, derart, dass durch Öffnungen der Säscheibe hindurch ein Luftstrom zur Rückseite hin erzeugt wird. Aufgrund der hierdurch im Bereich der Öffnungen hergestellten Druckdifferenz werden im Bereich der Öffnungen vereinzelte Saatkörner lokalisiert. Die so vereinzelten Körner können dann nach dem Lösen von der Vereinzelungsscheibe aus dem Gehäuse ausgebracht werden. Eine nach dem Überdruckprinzip arbeitende Vorrichtung ist beispielsweise im Dokument WO2008 / 108732A1 offenbart.

Das Dokument WO 2010/059101 A1 beschreibt eine landwirtschaftliche Maschine, die mindestens eine Bohreinheit umfasst, die wiederum eine Trageinrichtung sowie eine Saatgutdosiereinrichtung umfasst, wobei die Bohreinheit beweglich mit einem Strukturelement verbunden ist, das von der landwirtschaftlichen Maschine umfasst wird. Die Saatgutdosiereinrichtung ist fest mit der Abstützeinrichtung der Bohreinheit verbunden.

In Dokument DE 10 2016 204453 A1 wird eine Reiheneinheit einer landwirtschaftlichen Maschine zur Verteilung von granulatartigem Verteilgut wie Saatgut und/oder Dünger offenbart.

Eine Dosiereinrichtung für einen landwirtschaftlichen Pflanzer wird in Dokument EP 2 696 667 A1 beschrieben. Diese weist eine Dosierkammer mit einem Saatgutaustragsbereich und eine innerhalb der Dosierkammer drehbare Dosierscheibe auf. Die Dosierscheibe weist mehrere Saatguttaschen zum Tragen von Saatgut auf der Dosierscheibe auf, wobei die Saatguttaschen an voneinander beabstandeten Stellen um die Dosierscheibe angeordnet sind.

### Zusammenfassung

Aufgabe der Erfindung ist es, eine Vorrichtung und ein Verfahren zum Vereinzeln der Körner eines Saatguts, eines Düngers oder dergleichen anzugeben, die eine flexible und effiziente Arbeitsweise unterstützen.

Zur Lösung ist eine Vorrichtung sowie ein Verfahren zum Vereinzeln von Körnern eines Saatguts, eines Düngers oder dergleichen nach den unabhängigen Ansprüchen 1 und 11 vorgesehen. Weiterhin sind ein Säherz und eine Säreihe nach den Ansprüchen 9 und 10 geschaffen. Ausgestaltungen sind Gegenstand von abhängigen Unteransprüchen.

Nach einem Aspekt ist eine Vorrichtung zum Vereinzeln von Körnern eines Saatguts, eines Düngers oder dergleichen geschaffen, die eine nach dem Überdruckprinzip arbeitende Vereinzelungseinrichtung aufweist. Die Vereinzelungseinrichtung ist mit einem Gehäuse gebildet, welches mit einer an einem Rahmen oder an einer Säreihe einer landwirtschaftlichen Maschine zu montierenden Gehäusebasis und einem Gehäusedeckel gebildet ist, welcher zum Öffnen und zum Schließen eines Gehäuseinnenraums lösbar oder abnehmbar an der Gehäusebasis angeordnet ist. In dem Gehäuse ist ein Kornsumpf zum Aufnehmen von im Gehäuseinnenraum eingebrachten und zu vereinzelnden Körnern eines Saatguts, eines Düngers oder dergleichen vorgesehen. Eine Vereinzelungsscheibe ist im Gehäuseinnenraum drehbar gelagert und weist eine Anordnung von Öffnungen auf. Im Betrieb ist im Gehäusedeckel auf einer Vorderseite der Vereinzelungsscheibe ein Überdruckbereich ausbildbar, derart, dass aus dem Überdruckbereich durch die Öffnungen zur Rückseite der Vereinzelungsscheibe hin eine Strömung ausbildbar ist und hierdurch vereinzelte Körner im Bereich der Öffnungen oder benachbart hierzu lokalisierbar sind. Die Vereinzelungseinrichtung weist eine Kornübergabeeinrichtung auf, die mit einer Zuführung, einer Wanddurchführung und einer Ausgabe am Gehäusedeckel gebildet ist, wobei die vereinzelten Körner nach dem Lösen von der Vereinzelungsscheibe durch die Zuführung in der Wanddurchführung eingebracht und durch diese über die Ausgabe aus dem Gehäuseinnenraum herausgeführt werden können.

Nach einem weiteren Aspekt ist ein Verfahren zum Vereinzeln von Körnern eines Saatguts, eines Düngers oder dergleichen mittels einer nach dem Überdruckprinzip arbeitenden Vereinzelungseinrichtung geschaffen, wobei das Verfahren Folgendes aufweist: ein Gehäuse wird bereitgestellt, welches mit einer an einem Rahmen oder an einer Säreihe einer landwirtschaftlichen Maschine zu montierenden Gehäusebasis und einem Gehäusedeckel gebildet ist, welcher zum Öffnen und zum Schließen eines Gehäuseinnenraums lösbar an der Gehäusebasis angeordnet ist; ein Kornsumpf nimmt im Gehäuseinnenraum eingebrachte und zu vereinzelnde Körner eines Saatguts, eines Düngers oder dergleichen auf; eine Vereinzelungsscheibe, die im Gehäuseinnenraum angeordnet ist und eine Anordnung von Öffnungen aufweist, wird gedreht; ein Überdruckbereich wird im Gehäusedeckel auf einer Vorderseite der drehenden Vereinzelungsscheibe ausgebildet, derart, dass aus dem Überdruckbereich durch die Öffnungen zur Rückseite der Vereinzelungsscheibe hin eine Strömung ausgebildet wird und hierdurch vereinzelte Körner im Bereich der Öffnungen oder benachbart hierzu lokalisiert werden; und die vereinzelten Körner gelangen nach dem Lösen von der Vereinzelungsscheibe zu einer Kornübergabeeinrichtung, wobei die Kornübergabeeinrichtung eine Zuführung, eine Wanddurchführung und eine Ausgabe an dem Gehäusedeckel aufweist, derart, dass die vereinzelten Körner nach dem Lösen von der Vereinzelungsscheibe durch die Zuführung in der Wanddurchführung eingebracht und durch diese über die Ausgabe aus dem Gehäuseinnenraum herausgeführt werden.

Weiterhin sind ein Säherz sowie eine Säreihe geschaffen, die jeweils eine Vorrichtung zum Vereinzeln von Körnern eines Saatguts, eines Düngers oder dergleichen aufweisen.

An dem Gehäuse der Vereinzelungseinrichtung kann ein Motor angeordnet sein, beispielsweise an der Gehäusebasis, mit dem eine Antriebsbewegung für das Drehen der Vereinzelungsscheibe bereitgestellt ist. Der Motor kann an der Gehäusebasis zum Beispiel auf einer Gehäuserückseite angeordnet sein.

Am Gehäuse ist eine Zuführung vorgesehen, durch die hindurch die zu vereinzelnden Körner im Gehäuseinnenraum eingebracht werden können. Die Zuführung ist beispielsweise über eine Schlauchverbindung mit einem Behälter oder Tank verbunden, in dem das Saatgut, der Dünger oder dergleichen bereitgestellt wird.

Der Überdruckbereich ist derart ausbildbar, dass durch die Wanddurchführung der Kornübergabeeinrichtung hindurch eine Strömung ausgebildet werden kann, um die vereinzelten Körner in Ergänzung zu deren aufgrund der Gravitation verursachten Bewegung zu beschleunigen. Zum Ausbilden eines Überdrucks in dem Gehäuse, einschließlich des Überdruckbereichs auf der Vorderseite der Vereinzelungsscheibe, wird in dem Gehäuse über eine Fluidzufuhr ein gasförmiges Fluid eingebracht, beispielsweise Luft. Die Fluidzufuhr kann an dem Gehäusedeckel ausgebildet sein. Zum Bereitstellen des gasförmigen Fluidstroms kann ein Gebläse vorgesehen sein, dass zum Beispiel an einem Rahmenbauteil der landwirtschaftlichen Maschine aufgenommen sein kann.

Die Kornübergabeeinrichtung kann an dem Gehäusedeckel einstückig angeformt sein. Das einstückige Anformen kann beispielsweise dadurch erreicht sein, dass der Gehäusedeckel als ein Spritzgussbauteil hergestellt ist.

Im Bereich der Zuführung ist eine Kornaufnahme angeordnet sein, die eine mit der Wanddurchführung in Verbindung stehende Zuführöffnung für einen Korneintritt definiert und lösbar an dem Gehäusedeckel innenseitig anordnet. Die Kornaufnahme kann an die Zuführung angesetzt oder in dieser eingesetzt sein, insbesondere mit einem an der Kornaufnahme gebildeten Kopplungsabschnitt. Die Kornaufnahme kann auf einer Innenseite eines Wandabschnitts des Gehäusedeckels angeordnet sein. Es kann einen Satz von verschiedenen austauschbaren Kornaufnahmen vorgesehen sein, mit denen die Zuführöffnung für den Korneintritt an unterschiedliche Arten von Körnern angepasst werden kann, beispielsweise dadurch, dass die unterschiedlichen Kornaufnahmen verschiedene Durchmesser der Zuführöffnung bereitstellen. Die Kornaufnahme ist eingerichtet, das vereinzelte Korn nach dem Lösen von der Vereinzelungsscheibe aufzunehmen (einzufangen), um es dann durch die Wanddurchführung hindurch aus dem Gehäuseinnenraum nach außen zu führen.

Im Bereich der Zuführung der Kornübergabeeinrichtung ist ein Kornzwangsabstreifer angeordnet. Mit dem Kornzwangsabstreifer wird das Lösen der vereinzelnden Körner von der Vereinzelungsscheibe hilfsweise unterstützt. So kann in einer Ausführungsform vorgesehen sein, die Körner von den Öffnungen der Vereinzelungsscheibe zu trennen, in dem die durch die Strömung von der Vorder- zur Rückseite der Vereinzelungsscheibe an der zugeordneten Öffnung entstehende Druckdifferenz zeitlich begrenzt, beseitigt oder aufgehoben wird, worauf das Korn gelöst wird. Wenn dieser Löseprozess nicht korrekt funktioniert, kann das Korn mit dem Kornzwangsabstreifer zwangsweise gelöst werden, um es zur Kornübergabeeinrichtung zu bringen.

Der Kornzwangsabstreifer kann lösbar an der Kornaufnahme angeordnet sein. Hierdurch können unterschiedliche Kornzwangsabstreifer an der Kornaufnahme zum Einsatz kommen, wodurch eine Anpassung an unterschiedlichen Arten von Körnern erfolgen kann. Es kann ein Satz verschiedener Kornzwangsabstreifer bereitgestellt sein, die jeweils für unterschiedliche Arten von Körnern angepasst sind, beispielsweise in dem sie eine unterschiedliche Bauform aufweisen, beispielsweise hinsichtlich der äußeren Formgebung und / oder der Größe des Kornzwangsabstreifers.

An der Ausgabe der Kornübergabeeinrichtung kann eine Kopplungseinrichtung angeordnet sein, die eingerichtet ist, ein Kornleitrohr lösbar anzukoppeln. Das Kornleitrohr kann direkt oder durch ein zwischengekoppeltes Bauteil lösbar ankoppelbar sein. In einer Ausführungsform kann an die Kopplungseinrichtung der Ausgabe ein Sensorbauteil koppeln, mit dem die vorbeifliegenden vereinzelten Körner detektiert werden, beispielsweise ein optischer Sensor. Die Kopplungseinrichtung kann mit einem Schnellverschluss gebildet sein. Das Kornleitrohr kann mit einem Kornleitrohrbogen gebildet sein, der einen geraden und einen hieran sich anschließenden gekrümmten Rohrabschnitt aufweist. Der gerade Rohrabschnitt kann an die Kornübergabeeinrichtung koppeln. Das Ausbringen des Korns aus dem Kornleitrohr kann am Ende des gekrümmten Rohrabschnitts erfolgen. Neben dem Vereinzeln der Körner ist die Vorrichtung mit Hilfe des Kornleitrohrs dann ergänzend ausgebildet, die vereinzelten Körner auszubringen, nämlich über das Kornleitrohr. Ist die Vorrichtung zum Vereinzeln in ein Säherz integriert, kann das Kornleitrohr an das Säherz koppeln.

Die Kopplungseinrichtung kann an einem durch die Ausgabe in der Wanddurchführung eingesetztes Kopplungsbauteil gebildet sein. Das in die Wanddurchführung eingesetzte Kopplungsbauteil kann hierin lösbar oder wechselbar aufgenommen sein.

Das Kornleitrohr kann auf einem Trägerbauteil lösbar angeordnet werden. Das Trägerbauteil kann sich entlang des Kornleitrohres über dessen Gesamtlänge oder nur einen Teil hiervon erstrecken. Das Trägerbauteil kann als ein Flachbauteil ausgebildet sein. Zum lösbaren Anordnen des Kornleitrohres an den Trägerrohrteil kann eine Schwalbenschwanzbefestigung vorgesehen sein. Ist das Kornleitrohr mit einem Kornleitrohrbogen gebildet, kann sich das Trägerbauteil über den geraden und den gekrümmten Rohrabschnitt erstrecken.

Das Kornleitrohr kann in einem zur Kornübergabeeinrichtung proximalen Rohrabschnitt einen im Wesentlichen runden Rohrquerschnitt und in einem zur Kornübergabeeinrichtung distalen Rohrabschnitt einen im Wesentlichen ovalen Rohrquerschnitt aufweist sein. Der im Wesentlichen ovale Rohrquerschnitt kann im gekrümmten Rohrabschnitt angeordnet sein, wenn das Kornleitrohr mit dem Kornleitrohrbogen gebildet ist. Im Bereich einer Austrittsöffnung des Kornleitrohres, durch welche hindurch die vereinzelten Körner ausgebracht werden, kann der ovale Rohrquerschnitt aufrechtstehend angeordnet sein.

Im Gehäuseinnenraum kann in dem Gehäusedeckel ein Innenwandabschnitt angeordnet sein, welcher einen der Kornübergabeeinrichtung vorgelagerten Kornübergaberaum von einem verbleibenden Gehäuseinnenraum im Gehäusedeckel abschirmt, wobei der Innenwandabschnitt einen Durchbruch aufweist, der mit einer Fluidzuführung des Gehäuses in Verbindung steht, derart, dass im Betrieb mittels Zufuhr eines gasförmigen Fluides durch den Durchbruch hindurch in einer Öffnung, über welche der Kornübergaberaum und der Kornsumpf in Verbindung stehen, eine Gegenströmung ausbildbar ist, die einem Übertritt von Körnern aus dem Kornsumpf in den Kornübergaberaum durch die Öffnung hindurch entgegenwirkt. Mit Hilfe des Innenwandabschnitts ist der Kornübergaberaum gegenüber dem verbleibenden Gehäuseinnenraum im Gehäusedeckel abgetrennt. Der Durchbruch in dem Innenwandabschnitt steht mit der Zuführung des gasförmigen Fluides, insbesondere Luft, in Verbindung, so dass durch den Durchbruch hindurch das eingebrachte Fluid in den Kornübergaberaum strömt. Dieses bewirkt in der Öffnung, über welche der Kornübergaberaum und der Kornsumpf in Verbindung stehen, für die Gegenströmung, wodurch ein nicht beabsichtigter Übertritt von Körner aus dem Kornsumpf in den Kornübergaberaum behindert oder vollständig unterbunden ist. Auf diese Weise wird vermieden, dass unkontrolliert Körner aus dem Kornsumpf in die Kornübergabeeinrichtung gelangen, ohne das für diese Körner zuvor der Vereinzelungsprozess durchlaufen wurde. Der Durchbruch in dem Innenwandabschnitt kann allein von Teilen des Innenwandabschnitts umgeben sein. Alternativ kann der Durchbruch von Teilen des Innenwandabschnitts und einer Wandung des Gehäusedeckels umgeben sein. Die Öffnung zwischen Kornübergaberaum und Kornsumpf kann als weiterer Durchbruch in den Innenwandabschnitt oder als seitliche Ausnehmung an den Innenwandabschnitt gebildet sein. Abgesehen von dem Durchbruch und der Öffnung kann der Innenwandabschnitt als durchgehende geschlossene Wand ausgebildet sein.

Unabhängig von den verschiedenen Ausführungsformen kann die Zufuhr des gasförmigen Fluides in dem Gehäuseinnenraum durch ein Siebbauteil im Gehäusedeckel erfolgen, welches beispielsweise als ein Blechbauteil ausgeführt ist.

Die Vereinzelungsscheibe kann im Gehäusedeckel in einem drehbar gelagerten Teller angeordnet sein. Teller und Vereinzelungsscheibe können im Betrieb gemeinsam bewegt werden, so dass zwischen Teller und hierin aufgenommener Vereinzelungsscheibe keine Relativbewegung stattfindet. Die Vereinzelungsscheibe kann an ihrem äußeren Rand umlaufend formschlüssig in einer Aufnahme des Tellers angeordnet sein. In einer möglichen Ausführungsform kann auf der Teller zugewandten Rückseite der Vereinzelungsscheibe ein Unterbrecher angeordnet sein, der eingerichtet ist, die im Betrieb im Bereich der Öffnungen der Vereinzelungsscheibe auftretenden Druckdifferenzen zum Lokalisieren der Saatkörner zeitweise aufzuheben, um ein lösen der Körner von der Vereinzelungsscheibe zu unterstützen. Der Unterbrecher kann auf der Rückseite der Vereinzelungsscheibe zwischen dem Teller und der Vereinzelungsscheibe angeordnet sein, beispielsweise feststehend, so dass beim Drehen von Teller und Vereinzelungsscheibe eine Relativbewegung zwischen Unterbrecher und Vereinzelungsscheibe entsteht, wobei der Unterbrecher rückseitig über die Öffnungen streicht und so hierbei für die jeweilige Öffnung die Druckdifferenz kurzzeitig aufgehoben oder ausgeglichen wird. Der Unterbrecher kann als ein Flachbauteil mit zum Beispiel runder oder eckiger Flächenform ausgebildet sein, beispielsweise aus einem Gummi- oder einem Kunststoffmaterial.

In dem Betrieb kann im Gehäuse der Vereinzelungseinrichtung ein Überdruck von wenigstens etwa 50mbar, zum Beispiel zwischen etwa 60 und etwa 75 mbar, alternativ mit einem Überdruck von etwa 60 bis etwa 65mbar ausgebildet werden.

In Verbindung mit dem Verfahren zum Vereinzeln von Körnern eines Saatguts, eines Düngers oder dergleichen können die in Verbindung mit der Vorrichtung vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Vereinzelungseinrichtung zum Vereinzeln von Körnern eines Saatguts, eines Düngers oder dergleichen;
- Fig. 2: eine schematische Darstellung einer Gehäusebasis der Vereinzelungseinrichtung aus Fig. 1 in rückwärtiger Ansicht;
- Fig. 3: eine schematische Darstellung der Vereinzelungseinrichtung aus Fig. 1 von vorn;
- Fig. 4: eine schematische Darstellung der Vereinzelungseinrichtung aus Fig. 1 von der Seite;
- Fig. 5: eine schematische perspektivische Darstellung eines Gehäusedeckels;
- Fig. 6: eine schematische Darstellung des Gehäusedeckels aus Fig. 5 von vorn;
- Fig. 7: eine schematische Darstellung des Gehäusedeckels aus Fig. 5 von oben;
- Fig. 8: eine schematische Darstellung des Gehäusedeckels aus Fig. 5 von der Seite;
- Fig. 9: eine schematische perspektivische Darstellung eines weiteren Gehäusedeckels;
- Fig.10: eine schematische Darstellung des Gehäusedeckels aus Fig. 9 von vorn;
- Fig. 11: eine schematische Darstellung des Gehäusedeckels aus Fig. 9 von oben; und
- Fig. 12: eine schematische Darstellung des Gehäusedeckels aus Fig. 9 von der Seite.

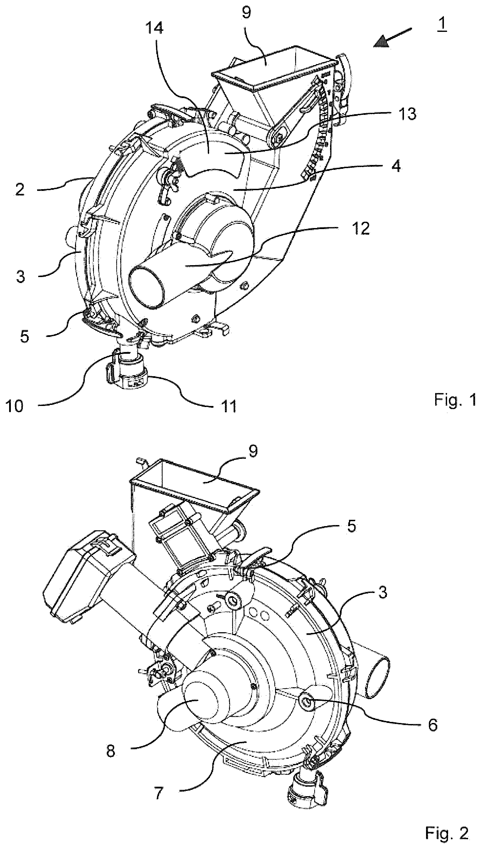

Fig. 1 zeigt eine schematische perspektivische Darstellung einer Vereinzelungseinrichtung 1 zum Vereinzeln von Körnern, eines Saatguts, eines Düngers oder dergleichen. Die Vereinzelungseinrichtung 1 ist mit einem Gehäuse 2 gebildet, welches eine Gehäusebasis 3 und einen Gehäusedeckel 4 aufweist, welcher zum Öffnen und zum Schließen des Gehäuses 2 mit Hilfe einer Verschlusseinrichtung 5 lösbar an der Gehäusebasis 3 angeordnet ist.

Gemäß Fig. 2 weist die Gehäusebasis 3 eine Befestigungseinrichtung 6 auf, mit der das Gehäuse 2 an einem Rahmen (nicht dargestellt) einer landwirtschaftlichen Maschine montiert wird, zum Beispiel an einer Säreihe. Auf einer Rückseite 7 der Gehäusebasis 3 ist eine Antriebseinrichtung 8 angeordnet, die mit einem Elektromotor gebildet ist.

Über eine Kornzufuhr 9 werden die zu vereinzelnden Körner in dem Gehäuse 2 eingebracht. Nach dem Vereinzeln verlassen die vereinzelten Körner das Gehäuse 2 über eine Kornübergabeeinrichtung 10 und gelangen dann in ein Kornleitrohr (nicht dargestellt), welches auch als Schussrohr bezeichnet werden kann. Das Kornleitrohr kann mittels eines Schnellverschlusses 11 an der Kornübergabeeinrichtung 10 lösbar angeordnet werden. Der Schnellverschluss 11 kann an der Kornübergabeeinrichtung 10 mit Hilfe eines Einsatzbauteils in die Kornübergabeeinrichtung 10 eingesetzt sein.

Über einen Fluidanschluss 12 kann in dem Gehäuse 2 ein gasförmiges Fluid eingebracht werden, insbesondere Luft, um in dem Gehäuse 2 oder nur Teilen hiervon einen Überdruck zu erzeugen. Der Überdruck führt dann dazu, dass die vereinzelten Körner über die Kornübergabeeinrichtung 10 in das angekoppelte Kornleitrohr mittels eines Fluidstroms beschleunigt werden.

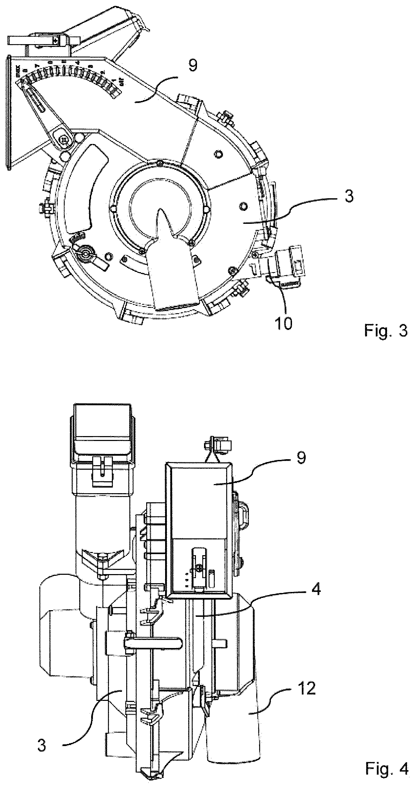

Am Gehäusedeckel 4 ist ein Sichtfenster 13 vorgesehen, durch welches hindurch ein Gehäuseinnenraum 14 teilweise eingesehen werden kann. Die Fig. 3 und 4 zeigen die Vereinzelungseinrichtung 1 aus Fig. 1 von vorn und der Seite.

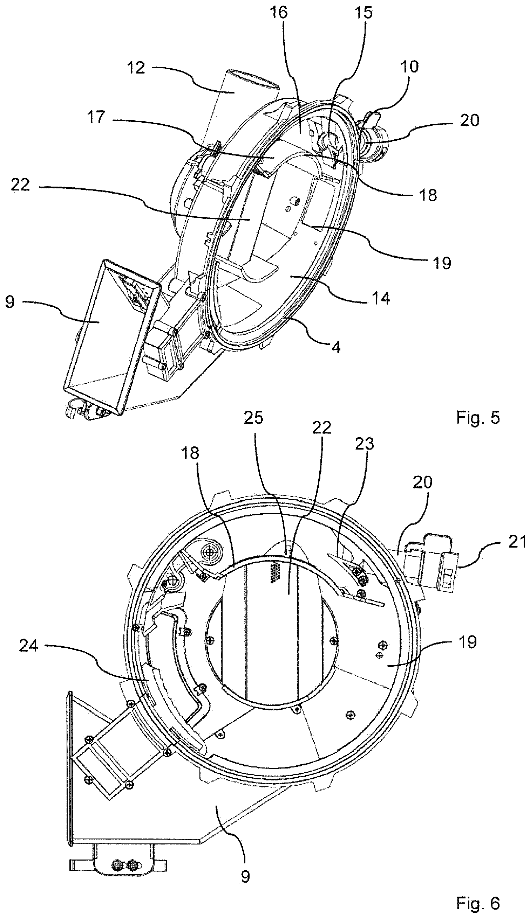

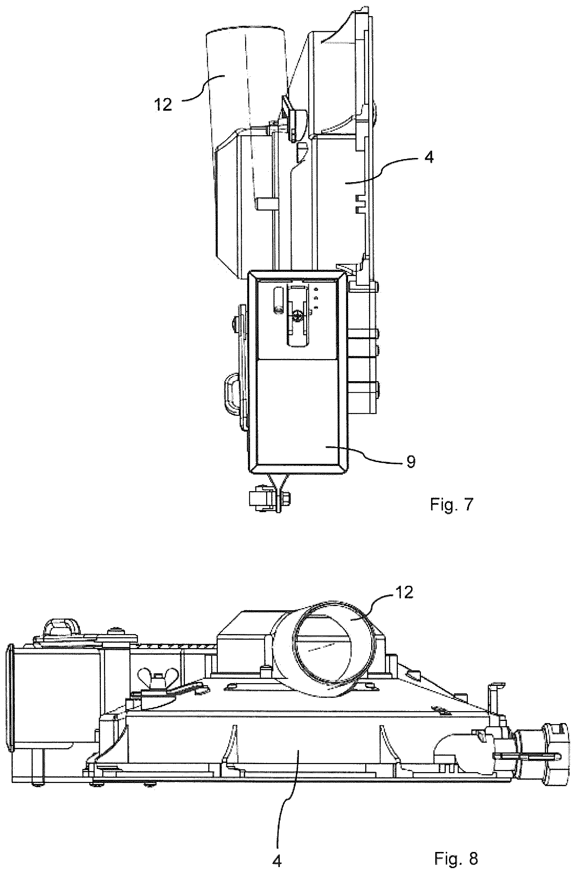

Die Fig. 5 bis 8 zeigen schematische Darstellungen des Gehäusedeckels 4. Gegenüber einer Zuführung 15 der Kornübergabeeinrichtung 10 ist ein Kornübergaberaum 16 angeordnet, welcher mit Hilfe eines Innenwandabschnitts 17 von übrigen Teilen des Gehäuseinnenraums 14 im Gehäusedeckel 4 abgetrennt oder abgeschirmt ist. Eine Öffnung 18 an dem Innenwandgehäuseabschnitt 17 verbindet den Kornübergaberaum 16 mit einem Kornsumpf 19 in dem Gehäusedeckel 4, in welchem die zu vereinzelnden Körner sich nach dem Einbringen zunächst sammeln.

Das Vereinzeln der Körner erfolgt mit Hilfe einer Sä- oder Vereinzelungsscheibe (nicht dargestellt), die in der Gehäusebasis 3 drehbar gelagert ist und mit Hilfe der Antriebseinrichtung 8 im Betrieb gedreht wird. Die Säscheibe weist Durchbrüche auf, durch die hindurch aufgrund eines Überdrucks auf einer Vorderseite der Säscheibe, insbesondere im Bereich des Gehäusedeckels 4, eine Luftströmung zur Rückseite der Säscheibe entsteht, wodurch aufgrund einer hierdurch verursachten Druckdifferenz vereinzelte Körner gegenüber bzw. an den Durchbrüchen der Säscheibe lokalisiert werden. Die lokalisierten Körner werden so in den Bereich des Kornübergaberaums 16 gebracht, um dort von der Sä- oder Vereinzelungsscheibe abgelöst und durch die Zuführung 15 in eine Wanddurchführung 20 der Kornübergabeeinrichtung 10 zu gelangen. Nach dem Durchlaufen der Wanddurchführung 20 der Kornübergabeeinrichtung 10 gelangen die vereinzelten Körner durch eine Ausgabe 21 in das nicht dargestellte Kornleitrohr. Auf diese Art und Weise arbeitet die Vereinzelungseinrichtung 1 nach dem Überdruckprinzip. Auf der Vorderseite der Säscheibe wird ein Überdruckbereich bereitgestellt, der einen Strom des gasförmigen Fluids durch die Durchbrüche der Säscheibe zu deren Rückseite bedingt.

Beim Einbringen des gasförmigen Fluids in dem Gehäuse 2 gelangt dieses bei der dargestellten Ausführungsform durch ein Siebbauteil 22, beispielsweise ein Blechsieb.

An der Kornübergabeeinrichtung 10 ist gemäß den Fig. 5 und 6 ein Zwangsabtreifer 23 lösbar angeordnet, welcher das Lösen der vereinzelten Körner von der Säscheibe unterstützt.

Im Gehäuseinnenraum 14 des Gehäusedeckels 4 ist weiterhin ein Zackenvereinzeler 24 angeordnet, beispielsweise einstückig mit dem Gehäusedeckel 4. Der Zackenvereinzeler 24 kann in einer alternativen Ausführungsform relativ zum Gehäusedeckel 4 verstellbar ausgeführt sein.

Das Gehäuse 2 der Vereinzelungseinrichtung 1 ist ausgelegt, für den Betrieb mit einem Überdruck zwischen etwa 50 und etwa 75 mbar, alternativ mit einem Überdruck von etwa 60 bis etwa 65mbar. Beispielsweise ist eine umlaufende Dichtungseinrichtung eingerichtet für solche Überdrücke in dem Gehäuse 2.

An dem Innenwandabschnitt 17 ist ein Durchbruch 25 gebildet, welcher den Kornübergaberaum 16 mit der Zuführung für das gasförmige Fluid verbindet, der Art, dass im Betrieb mittels Zufuhr des gasförmigen Fluids durch den Durchbruch 25 hindurch in der Öffnung 18, über welche der Kornübergaberaum 16 und der Kornsumpf 19 in Verbindung stehen, eine Gegenströmung ausbildbar ist, die einem Übertritt von Körnern aus dem Kornsumpf 19 in den Kornübergaberaum 16 durch die Öffnung 18 hindurch entgegen wirkt. Auf diese Weise wird verhindert, dass im Betrieb unbeabsichtigt Körner aus dem Kornsumpf 19 in den Kornübergaberaum 16 gelangen und so eventuell das Ausbringen der vereinzelten Körner behindern. Der Durchbruch 25 ist zum Beispiel als seitliche Ausnehmung an dem Innenwandabschnitt 17 gebildet, so dass der Durchbruch 25 von dem Innenwandabschnitt 17 und dem Deckelgehäuse 4 begrenzt ist. Alternativ kann der Durchbruch 25 umlaufend von Abschnitten des Innenwandabschnitts 17 umgeben sein. Es kann eine Anordnung von mehreren Durchbrüchen vorgesehen sein.

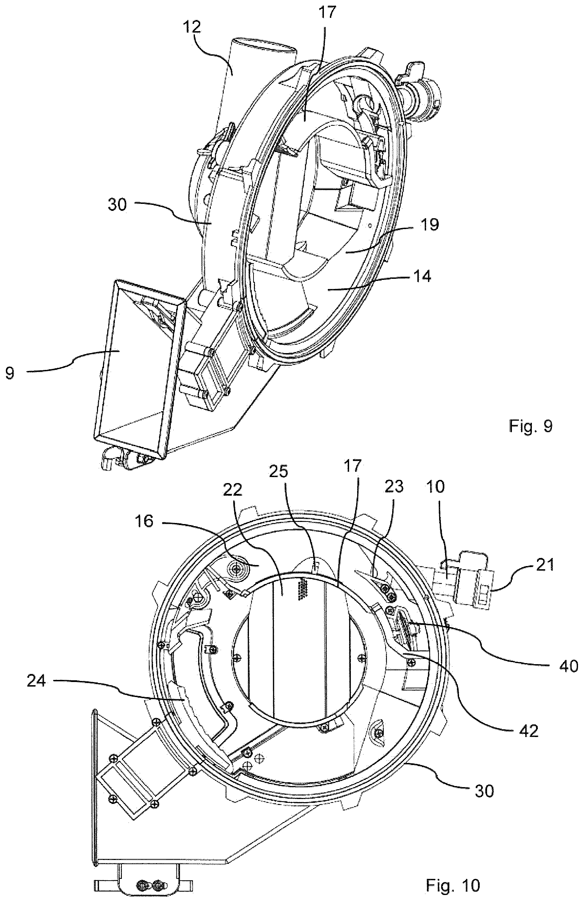

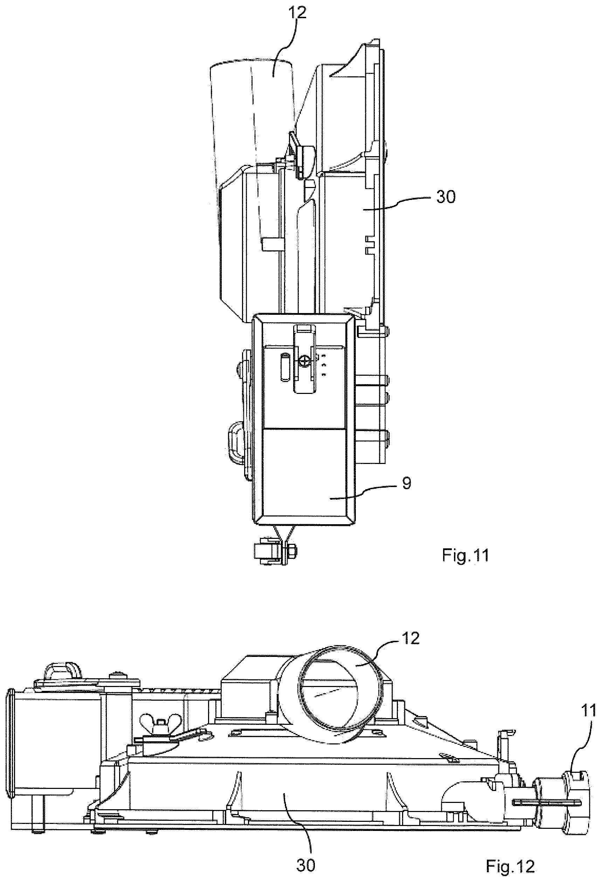

Die Fig. 9 bis 12 zeigen einen weiteren Gehäusedeckel 30. Für gleiche Merkmale werden in den Fig. 9 bis 12 dieselben Bezugszeichen wie in den Figuren 1 bis 8 verwendet. Der weitere Gehäusedeckel 30 ist teilweise verändert ausgestaltet im Vergleich zum Gehäusedeckel 4, um so eine Anpassung für andere Körner vorzunehmen. Beispielsweise kann der Gehäusedeckel 4 aus den Fig. 5 bis 8 für das Ausbringen von Maiskörnern eingerichtet sein, wohingegen der weitere Gehäusedeckel 30 in den Fig. 9 bis 12 dem Ausbringen von Rapskörnern dient.

Zur Ausbringung von Rapskörnern wird in den weiteren Gehäusedeckel 30 eine, vorzugsweise auswechselbare, Kornaufnahme 42 eingesetzt. Diese Kornaufnahme 42 weist für den Durchtritt der Rapskörner einen kreisrunden Querschnitt mit einem Innendurchmesser von etwa 15 mm auf. Für die Aussaat von Maiskörnern wird dagegen bevorzugt eine Kornaufnahme mit einem Innendurchmesser von etwa 18 mm verwendet. Für den Wechsel von Rapskörnern auf Maiskörner kann die Kornaufnahme im Gehäusedeckel 4 entsprechend ausgetauscht werden.

Für den Betrieb mit Rapskörnern kommt gemäß der in Fig. 10 dargestellten Ausführungsform optional ein Reinigungsrad 40 zum Einsatz. Das Reinigungsrad 40 ist im Gehäusedeckel 30 drehbar gelagert und vorzugsweise als Zahnrad ausgeführt. Das Reinigungsrad 40 ist relativ zu einer Säscheibe (nicht dargestellt) in der Weise angeordnet, dass jeder Zahn des Reinigungsrades 40 mit einem korrespondierenden Durchbruch in der Säscheibe ineinandergreift.

Für die Ausbringung von Rapskörnern können im weiteren Gehäusedeckel 30 zusätzliche, konstruktive Elemente vorgesehen sein, um beispielsweise im Zusammenspiel mit der Kornzufuhr 9 den Zulauf der Rapskörner in Richtung des Kornsumpfs 19 gezielt zu steuern und somit zu optimieren, da Rapskörner zum Beispiel im Vergleich zu Maiskörnern ein deutlich höheres Fließverhalten aufweisen. Derartige konstruktive Elemente können vorzugsweise austauschbar ausgeführt sein.

Für weitere Saatgutkörner können entsprechend der Korncharakteristik (nicht dargestellte) konstruktive Elemente im weiteren Gehäusedeckel 30 und/oder im Gehäusedeckel 4, vorzugsweise austauschbar, vorgesehen sein. Die Korncharakteristik kann die Korngröße, die Kornbeschaffenheit hinsichtlich Oberfläche und/oder die Körnerform im Allgemeinen betreffen.

Die in der vorstehenden Beschreibung, den Ansprüchen sowie der Zeichnung offenbarten Merkmale können sowohl einzeln als auch in den Kombinationen, wie in den beliegenden Ansprüchen definiert, für die Verwirklichung der verschiedenen Ausführungen von Bedeutung sein.

## Patentansprüche

1. Vorrichtung zum Vereinzeln von Körnern eines Saatguts, eines Düngers oder dergleichen, mit einer nach dem Überdruckprinzip arbeitenden Vereinzelungseinrichtung, die Vereinzelungseinrichtung aufweisend:
- ein Gehäuse, welches mit einer an einem Rahmen oder an einer Säreihe einer landwirtschaftlichen Maschine zu montierenden Gehäusebasis und einem Gehäusedeckel gebildet ist, welcher zum Öffnen und zum Schließen eines Gehäuseinnenraums lösbar an der Gehäusebasis angeordnet ist;
- einen Kornsumpf, der eingerichtet ist, im Gehäuseinnenraum eingebrachte und zu vereinzelnde Körner eines Saatguts, eines Düngers oder dergleichen aufzunehmen;
- eine Vereinzelungsscheibe, die im Gehäuseinnenraum drehbar gelagert ist und eine Anordnung von Öffnungen aufweist;
- einen Überdruckbereich, welcher im Betrieb im Gehäusedeckel auf einer Vorderseite der Vereinzelungsscheibe ausbildbar ist, derart, dass aus dem Überdruckbereich durch die Öffnungen zur Rückseite der Vereinzelungsscheibe hin eine Strömung ausbildbar ist und hierdurch vereinzelte Körner im Bereich der Öffnungen oder benachbart hierzu lokalisierbar sind; und
- eine Kornübergabeeinrichtung, die mit einer Zuführung, einer Wanddurchführung und einer Ausgabe an dem Gehäusedeckel gebildet ist, wobei die vereinzelten Körner nach dem Lösen von der Vereinzelungsscheibe durch die Zuführung in der Wanddurchführung eingebracht und durch diese über die Ausgabe aus dem Gehäuseinnenraum herausgeführt werden können, wobei -
im Bereich der Zuführung (15) eine Kornaufnahme (42) angeordnet ist, die eine mit der Wanddurchführung (20) in Verbindung stehende Zuführöffnung für einen Korneintritt definiert und lösbar an dem Gehäusedeckel (4, 30) innenseitig angeordnet ist; **dadurch gekennzeichnet, dass** im Bereich der Zuführung (15) ein Kornzwangsabstreifer (23) angeordnet ist, der an der Kornaufnahme (42) lösbar angeordnet ist und eingerichtet ist, das Lösen vereinzelter Körner von der Vereinzelungsscheibe hilfsweise zu unterstützen.

2. Vorrichtung nach Anspruch 1, **dadurch gekennzeichnet, dass** die Kornübergabeeinrichtung an dem Gehäusedeckel einstückig angeformt ist.

3. Vorrichtung nach Anspruch 1 oder 2, **dadurch gekennzeichnet, dass** an der Ausgabe der Kornübergabeeinrichtung eine Kopplungseinrichtung angeordnet ist, die eingerichtet ist, ein Kornleitrohr lösbar anzukoppeln.

4. Vorrichtung nach Anspruch 3, **dadurch gekennzeichnet, dass** die Kopplungseinrichtung an einem durch die Ausgabe in der Wanddurchführung eingesetztes Kopplungsbauteil gebildet ist.

5. Vorrichtung nach Anspruch 3 oder 4, **dadurch gekennzeichnet, dass** das Kornleitrohr auf einem Trägerbauteil lösbar angeordnet ist.

6. Vorrichtung nach mindestens einem der Ansprüche 3 bis 5, **dadurch gekennzeichnet, dass** das Kornleitrohr in einem zur Kornübergabeeinrichtung proximalen Rohrabschnitt einen im Wesentlichen runden Rohrquerschnitt und in einem zur Kornübergabeeinrichtung distalen Rohrabschnitt einen im Wesentlichen ovalen Rohrquerschnitt aufweist.

7. Vorrichtung nach mindestens einem der vorangehenden Ansprüche, **dadurch gekennzeichnet, dass** im Gehäuseinnenraum in dem Gehäusedeckel ein Innenwandabschnitt angeordnet ist, welcher einen der Kornübergabeeinrichtung vorgelagerten Kornübergaberaum von einem verbleibenden Gehäuseinnenraum im Gehäusedeckel abschirmt, wobei der Innenwandabschnitt einer Durchbruch aufweist, der mit einer Fluidzuführung des Gehäuses in Verbindung steht, derart, dass im Betrieb mittels Zufuhr eines gasförmigen Fluids durch den Durchbruch hindurch in einer Öffnung, über welche der Kornübergaberaum und der Kornsumpf in Verbindung stehen, eine Gegenströmung ausbildbar ist, die einem Übertritt von Körnern aus dem Kornsumpf in den Kornübergaberaum durch die Öffnung hindurch entgegenwirkt.

8. Vorrichtung nach mindestens einem der vorangehenden Ansprüche, **dadurch gekennzeichnet, dass** die Vereinzelungsscheibe im Gehäusedeckel in einem drehbar gelagerten Teller angeordnet ist.

9. Säherz mit einer Vorrichtung nach mindestens einem der vorangehenden Ansprüche.

10. Säreihe mit einer Vorrichtung nach mindestens einem der vorangehenden Ansprüche.

11. Verfahren zum Vereinzeln von Körnern eines Saatguts, eines Düngers oder dergleicher mittels einer nach dem Überdruckprinzip arbeitenden Vereinzelungseinrichtung, wobei bei dem Verfahren:
- ein Gehäuse bereitgestellt wird, welches mit einer an einem Rahmen oder an einer Säreihe einer landwirtschaftlichen Maschine zu montierenden Gehäusebasis und einem Gehäusedeckel gebildet ist, welcher zum Öffnen und zum Schließen eines Gehäuseinnenraums lösbar an der Gehäusebasis angeordnet ist;
- ein Kornsumpf im Gehäuseinnenraum eingebrachte und zu vereinzelnde Körner eines Saatguts, eines Düngers oder dergleichen aufnimmt;
- eine Vereinzelungsscheibe, die im Gehäuseinnenraum angeordnet ist und eine Anordnung von Öffnungen aufweist, gedreht wird;
- ein Überdruckbereich im Gehäusedeckel auf einer Vorderseite der drehenden Vereinzelungsscheibe ausgebildet wird, derart, dass aus dem Überdruckbereich durch die Öffnungen zur Rückseite der Vereinzelungsscheibe hin eine Strömung ausgebildet wird und hierdurch vereinzelte Körner im Bereich der Öffnungen oder benachbart hierzu lokalisiert werden; und
- die vereinzelten Körner nach dem Lösen von der Vereinzelungsscheibe zu einer Kornübergabeeinrichtung gelangen, wobei die Kornübergabeeinrichtung eine Zuführung, eine Wanddurchführung und eine Ausgabe an dem Gehäusedeckel aufweist, derart, dass die vereinzelten Körner nach dem Lösen von der Vereinzelungsscheibe durch die Zuführung in der Wanddurchführung eingebracht und durch diese über die Ausgabe aus dem Gehäuseinnenraum herausgeführt werden, wobei im Bereich
der Zuführung (15) eine Kornaufnahme (42) angeordnet ist, die eine mit der Wanddurchführung (20) in Verbindung stehende Zuführöffnung für einen Korneintritt definiert und lösbar an dem Gehäusedeckel (4, 30) innenseitig angeordnet ist; **dadurch gekennzeichnet, dass** das Lösen vereinzelter Körner von der Vereinzelungsscheibe hilfsweise mittels eines Kornzwangsabstreifer (23) unterstützt wird, der im Bereich der Zuführung (15) lösbar an der Kornaufnahme (42) angeordnet ist.

12. Verfahren nach Anspruch 11, **dadurch gekennzeichnet, dass** der Überdruckbereich im Gehäuseinnenraum mit einem Überdruck von wenigstens etwa 60mbar ausgebildet wird.

## Claims

1. A device for separating out grains of seed, fertilizer, or the like, having a separating device that operates according to the positive-pressure principle, the separating device comprising:
- a housing that is formed with a housing base to be mounted on a frame or on a seed line of an agricultural machine and a housing cover that is detachably arranged on the housing base for opening and closing a housing interior;
- a grain sump configured to receive grains of seed, fertilizer, or the like that are introduced into the housing interior and are to be separated out;
- a separating disc that is rotatably mounted in the housing interior and has an arrangement of openings;
- a positive-pressure region that can be formed, during operation, in the housing cover on a front side of the separating disc such that a flow can be formed from the positive-pressure region toward the rear side of the separating disc through the openings, whereby separated grains can be localized near the openings or adjacent thereto; and
- a grain transfer device that is composed of a feed, a wall duct, and an outlet on the housing cover, it being possible for the separated grains to be introduced through the feed in the wall duct after being released from the separating disc and to be guided out of the housing interior by same via the outlet, a grain receiver (42) being arranged in the vicinity of the feed (15) that defines a feed opening for a grain inlet that is connected to the wall duct (20) and detachably arranged on the inside of the housing cover (4, 30); **characterized in that** a forced grain scraper (23) is arranged in the vicinity of the feed (15), that is detachably arranged on the grain receiver (42) and is configured to assist in releasing separated grains from the separating disc.

2. The device as set forth in claim 1, **characterized in that** the grain transfer device is integrally molded on the housing cover.

3. The device as set forth in claim 1 or 2, **characterized in that** a coupling device is arranged at the outlet of the grain transfer device and configured to detachably couple a grain conduit.

4. The device as set forth in claim 3, **characterized in that** the coupling device is formed on a coupling component that is inserted through the outlet in the wall duct.

5. The device as set forth in claim 3 or 4, **characterized in that** the grain conduit is detachably arranged on a support member.

6. The device as set forth in at least one of claims 3 to 5, **characterized in that** the grain conduit has a substantially round conduit cross section in a conduit portion that is proximal to the grain transfer device and a substantially oval conduit cross section in a conduit portion that is distal to the grain transfer device.

7. The device as set forth in at least one of the preceding claims, **characterized in that** an inner wall portion is arranged in the housing interior in the housing cover, which inner wall portion shields a grain transfer chamber upstream from the grain transfer device from the rest of the housing interior in the housing cover, the inner wall portion having a passage that is connected to a fluid feed of the housing such that a counterflow can be formed during operation by feeding a gaseous fluid through the passage in an opening via which the grain transfer chamber and the grain sump are connected, said counterflow counteracting the passage of grains out of the grain sump and into the grain transfer chamber through the opening.

8. The device as set forth in at least one of the preceding claims, **characterized in that** the separating disc is arranged in a rotatably mounted plate in the housing cover.

9. A seed meter having a device as set forth in at least one of the preceding claims.

10. A seed line having a device as set forth in at least one of the preceding claims.

11. A method for separating grains of seed, fertilizer, or the like by means of a separating device that operates according to the positive-pressure principle, in which method:
- a housing is provided that has a housing base to be installed on a frame or on a seed line of an agricultural machine, and a housing cover that is detachably arranged on the housing base for opening and closing a housing interior;
- a grain sump receives grains of seed, fertilizer, or the like that are introduced into the housing interior and are to be separated out;
- a separating disc that is arranged in the housing interior and has an arrangement of openings is rotated;
- a positive-pressure region is formed in the housing cover on a front side of the rotating separating disc such that a flow is formed from the positive-pressure region toward the rear side of the separating disc through the openings, whereby separated grains are localized near the openings or adjacent thereto; and
- the separated grains reach a grain transfer device after being released from the separating disc, the grain transfer device having a feed, a wall duct, and an outlet on the housing cover, such that the separated grains are introduced into the wall duct after being released from the separating disc and guided by same out of the interior of the housing via the outlet, a grain receiver (42) being arranged in the vicinity of the feed (15), which grain receiver defines a feed opening for a grain inlet connected to the wall duct (20) and is arranged detachably on the on the inside of the housing cover (4, 30); **characterized in that** the releasing of separated grains from the separating disc is assisted by means of a forced grain scraper (23) that is detachably arranged on the grain receiver (42) in the vicinity of the feed (15).

12. The method as set forth in claim 11, **characterized in that** the positive-pressure region in the housing interior is formed with a positive pressure of at least approximately 60 mbar.

## Revendications

1. Dispositif de séparation de graines d'une semence, d'un engrais ou similaires, comprenant un dispositif de séparation appliquant le principe de surpression, le moyen de séparation comportant :
- un boîtier qui est formé d'une base de boîtier, destinée à être montée sur un cadre ou sur une ligne de semis d'une machine agricole et d'un couvercle de boîtier, qui est disposé de manière amovible sur la base de boîtier pour ouvrir et fermer un espace interne de boîtier ;
- un réservoir de graines qui est conçu pour recevoir les graines d'une semence, d'un engrais ou similaire ayant été introduites dans l'espace interne de boîtier et destinées à être séparées ;
- un disque de séparation, qui est monté à rotation dans l'espace interne du boîtier et qui comporte un agencement d'ouvertures ;
- une région de surpression qui peut être réalisée sur une face avant du disque de séparation pendant le fonctionnement dans le couvercle de boîtier, de sorte qu'un écoulement puisse être réalisé à partir de la région de surpression à travers les ouvertures vers la face arrière du disque de séparation et que des graines ainsi séparées puissent être localisées dans la région des ouvertures ou à proximité de ces dernières ; et
- un moyen de transfert de graines qui est formé d'une alimentation, d'une traversée de paroi et d'une distribution sur le couvercle de boîtier, dans lequel les graines séparées peuvent être introduites dans la traversée de paroi à travers l'alimentation après le retrait du disque de séparation, et peuvent être extraites de l'espace interne du boîtier par l'intermédiaire de la distribution à travers cette dernière, dans lequel un réceptacle à graines (42) est disposé dans la région de l'alimentation (15), lequel réceptacle à graines définit une ouverture d'alimentation pour une entrée de graines reliée à la traversée de paroi (20) et est disposé de manière amovible sur la face intérieure du couvercle de boîtier (4, 30) ; **caractérisé en ce qu'**un racleur de graines forcé (23) est disposé dans la région de l'alimentation (15), lequel racleur de graines forcé est disposé de manière amovible sur le réceptacle à graines (42) et est conçu pour aider de manière auxiliaire au détachement des graines séparées du disque de séparation.

2. Dispositif selon la revendication 1, **caractérisé en ce que** le moyen de transfert de graines est réalisé d'une seule pièce sur le couvercle de boîtier.

3. Dispositif selon la revendication 1 ou 2, **caractérisé en ce qu'**un moyen de couplage est disposé au niveau de la distribution du moyen de transfert de graines, lequel moyen de couplage est conçu pour coupler de manière amovible un tube de guidage de graines.

4. Dispositif selon la revendication 3, **caractérisé en ce que** le moyen de couplage est réalisé sur un élément de couplage inséré dans la traversée de paroi à travers la distribution.

5. Dispositif selon la revendication 3 ou 4, **caractérisé en ce que** le tube de guidage de graines est disposé de manière amovible sur un composant de support

6. Dispositif selon au moins l'une des revendications 3 à 5, **caractérisé en ce que** le tube de guidage de graines comporte une section de tube sensiblement ronde dans une section de tube proximale au moyen de transfert de graines et une section de tube sensiblement ovale dans une section de tube distale au moyen de transfert de graines.

7. Dispositif selon au moins l'une des revendications précédentes, **caractérisé en ce qu'**une section de paroi intérieure est disposée dans l'espace interne de boîtier dans le couvercle de boîtier, laquelle section de paroi intérieure protège un espace de transfert de graines en amont du dispositif de transfert de graines contre un espace interne de boîtier restant dans le couvercle de boîtier, dans lequel la section de paroi intérieure comporte une ouverture qui communique avec une alimentation en fluide du boîtier, de sorte que, pendant le fonctionnement, un écoulement à contre-sens puisse être réalisé au moyen de l'amenée d'un fluide gazeux dans une ouverture à travers le passage par lequel l'espace de transfert de graines et le réservoir de graines sont reliés, lequel écoulement à contre-sens s'oppose au transfert des graines du réservoir de graines dans l'espace de transfert de graines à travers l'ouverture.

8. Dispositif selon au moins l'une des revendications précédentes, **caractérisé en ce que** le disque de séparation est disposé dans le couvercle de boîtier dans une plaque montée à rotation.

9. Distributeur de semoir comprenant un dispositif selon au moins l'une des revendications précédentes.

10. Ligne de semis comprenant un dispositif selon au moins l'une des revendications précédentes.

11. Procédé de séparation de graines d'une semence, d'un engrais ou similaire au moyen d'un dispositif de séparation appliquant le principe de la surpression, **caractérisé en ce que** dans le procédé :
- un boîtier est prévu, lequel boîtier est formé d'une base de boîtier, destinée à être montée sur un cadre ou sur une ligne de semis d'une machine agricole et d'un couvercle de boîtier, qui est disposé de manière amovible sur la base de boîtier pour ouvrir et fermer un espace interne de boîtier ;
- un réservoir de graines reçoit les graines d'une semence, d'un engrais ou similaire ayant été introduites dans l'espace interne de boîtier et destinées à être séparées ;
- un disque de séparation est tourné, lequel disque de séparation est disposé dans l'espace interne du boîtier et comporte un agencement d'ouvertures ;
- une région de surpression est réalisée dans le couvercle de boîtier sur une face avant du disque de séparation rotatif, de sorte qu'un écoulement se réalise à partir de la région de surpression à travers les ouvertures vers la face arrière du disque de séparation et que les graines ainsi séparées soient localisées dans la région des ouvertures ou à proximité de ces dernières ; et
- les graines séparées passent dans un moyen de transfert de graines après le retrait du disque de séparation, dans lequel le moyen de transfert de graines comporte une alimentation, une traversée de paroi et une distribution sur le couvercle de boîtier, de sorte que les graines séparées sont introduites dans la traversée de paroi à travers l'alimentation après le retrait du disque de séparation et sont extraites de l'espace interne du boîtier par l'intermédiaire de la distribution, dans lequel un réceptacle à graines (42) est disposé dans la région de l'alimentation (15), lequel réceptacle à graines définit une ouverture d'alimentation pour une entrée de graines reliée à la traversée de paroi (20) et est disposé de manière amovible sur la face intérieure du couvercle de boîtier (4, 30) ; **caractérisé en ce que** le retrait des graines séparées du disque de séparation est aidé de manière auxiliaire au moyen d'un racleur de graines forcé (23) qui est disposé de manière amovible sur le réceptacle à graines (42) dans la région de l'alimentation (15).

12. Procédé selon la revendication 11, **caractérisé en ce que** la région de surpression dans l'espace interne de boîtier est réalisée par une surpression d'au moins environ 60 mbar.
